# EUROPEAN PATENT APPLICATION

(11) **EP 2 080 678 A2**
(43) Date of publication of application: **22.07.2009**
(21) Application number: 09000418.5
(22) Date of filing: 14.01.2009
(51) Int. Cl.: B60R 22/48

(54) **Electronic mechanism for application in automotive vehicles to enforce the use of the safety seat belts**

(30) Priority: 21.01.2008 ES 200800136
(71) Applicant: Chacon Fernandez, Fernando, 07141 Marratxi (Baleares) (ES)
(72) Inventor: Chacon Fernandez, Fernando, 07141 Marratxi (Baleares) (ES)
(74) Representative: Duran Benejam, Maria del Carmen

(57) **Abstract**

AN ELECTRONIC MECHANISM FOR APPLICATION IN AUTOMOTIVE VEHICLES TO ENFORCE THE USE OF SAFETY SEAT BELTS, comprised of a relay (1) connected to the starting engine (3), a key (4) connected by cabling to the driver's safety seat belt (5) and in succession to the other belts (6a), (6b), (6c) and (6d), with switches (9) and (13) associated to the buckles (8) and to sensors (14) in the seats, respectively; the last belt (6d) is connected to a buzzer (15) and to the starting key (16) and also to the key (4) that acts as an anti-theft device. The belts are fitted with a push button (7) in each buckle (8) that presses down on the switch (9) that is inserted in a groove (10) attached to the lower support (11) of the belt, in which a hole (12) has been drilled, to allow the push button (7) to pass through for it to activate the switch (9).

## Description

### PURPOSE OF THE INVENTION

As expressed in the title of this descriptive brief, the invention refers to an electronic mechanism for application in automotive vehicles to force the use of the safety seat belts.

### BACKGROUND TO THE INVENTION

As a result of the growing increase in road accidents, and the fact that in the majority of cases, wearing a safety seat belt reduces the terrible effects of those accidents to a considerable extent, it has become desirable to create systems and devices that will compel the occupants of automotive vehicles to buckle the safety seat belts at all times.

In this respect, some of the devices usually incorporated in mass-produced vehicles are well known. Through acoustic or visual signals, these devices generally inform only the driver or the driver and passenger in the front seat that the safety seat belts are not buckled. However, such systems are comprised only of warnings that do not oblige the occupants to buckle the belts before the automotive vehicle's engine is switched on.

### EXPLANATION OF THE INVENTION

The electronic mechanism for application in automotive vehicles to force the use of the safety seat belts constitutes, in itself, an obvious novelty in its field of application, and satisfactorily complies with the foregoing suitable objectives, since its application gives rise to a system that makes it necessary for each of the vehicle occupants to have their safety seat belts buckled for the vehicle to start up. In addition it has elements for identifying the position and number of occupants, in order to prevent belts in unoccupied seats from being buckled. The details that make this possible are fully described in the final claims accompanying the present descriptive brief.

Specifically, the mechanism proposed by the invention consists of a set of elements that can easily be installed, which is duly connected to the vehicle battery power supply and the starting engine of the vehicle, with push buttons and switches located in each buckle, respectively, inferior supports of safety seat belts and seats, and a switch with a key in two positions. This device does that when inserting the starting key into the vehicle's contact, if all the safety seat belts are not duly buckled, it is not possible to start the vehicle and a warning signal goes off (for example, a buzzer or any other type of acoustic or visual signal, for instance, a warning message, etc.).

That way, it is not possible to start up the vehicle and the warning signal will not go off until each of the occupants in the vehicle has buckled their safety seat belts. As an option, it can be disconnected by using a safety key that is expressly located outside the interior of the vehicle, in a suitable, discreet place, making it necessary for the occupants to get out of the vehicle in order to disconnect it, which avoids the temptation to disconnect the mechanism merely due to the discomfort it causes.

On the other hand, the system acts simultaneously with the anti-theft safety element, since that key is used to connect it.

Consequently, the electronic mechanism for application in automotive vehicles to enforce the use of safety seat belts described above is an innovative system, with technical, structural and constitutive characteristics hitherto unknown in the market. These reasons, together with its practical usage, make it sufficiently appropriate to obtain the privilege of exclusivity that is being requested.

### DESCRIPTION OF THE ILLUSTRATIONS

To complete the description contained herein, and with the aim of allowing for a better understanding of the characteristics of the invention, a set of illustrations is attached to this descriptive brief, as an inseparable part thereof, of a set of drawings, in which the following are shown, for the purpose of illustrating, without limitation:
Figure number 1. This is an electrical diagram of the electronic mechanism described by this patent, in which its main elements and operation can be seen.
Figure number 2.- This is a diagrammatic illustration of the layout of the different mechanism elements inside the vehicle.
Figure number 3.- This shows a view of the buckle, the lower support holding the belt with the necessary modifications and elements for installing the mechanism.

### PREFERRED USE OF THE INVENTION

On inspecting the mentioned figures, and based on the numbering used, the preferred use of the invention is shown in them which includes the parts that are indicated and described below.

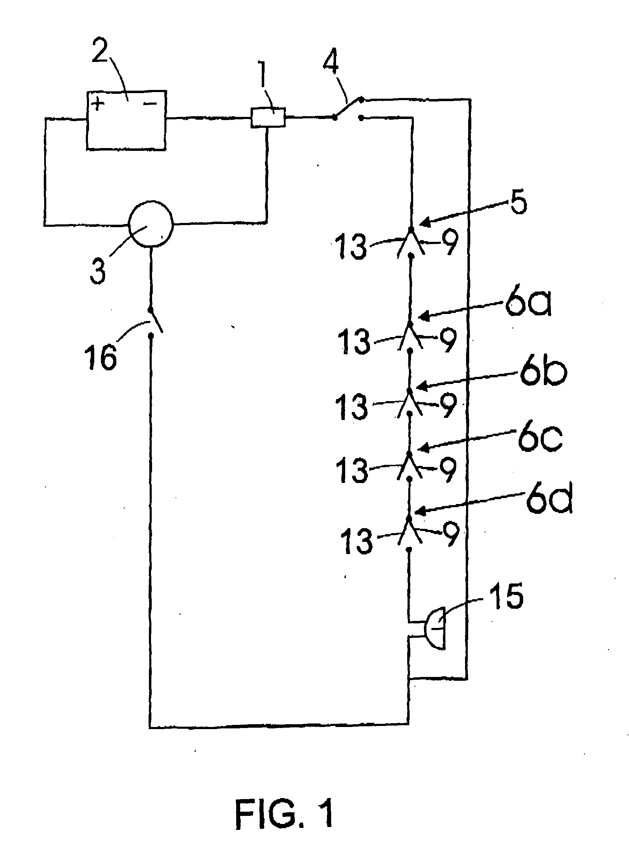

Thus, as shown in the diagram in figure 1, the electronic mechanism described is essentially comprised of a relay (1) that is supplied with power directly from the battery (2) of the vehicle. This, in turn, is connected to the starting engine (3) of the vehicle, with a conventional key (4) with two contacts (on-off) plus another middle position that serves as an anti-theft device, preferably located outside the interior of the vehicle and suitably hidden. This is connected by the respective cables, firstly to the driver's safety seat belt (5) and then in succession to the other safety seat belts in the vehicle, the front passenger's safety seat belt (6a) and rear safety seat belts (6b), (6c), (6d) through switches (9) and to the respective seats through additional switches (13).

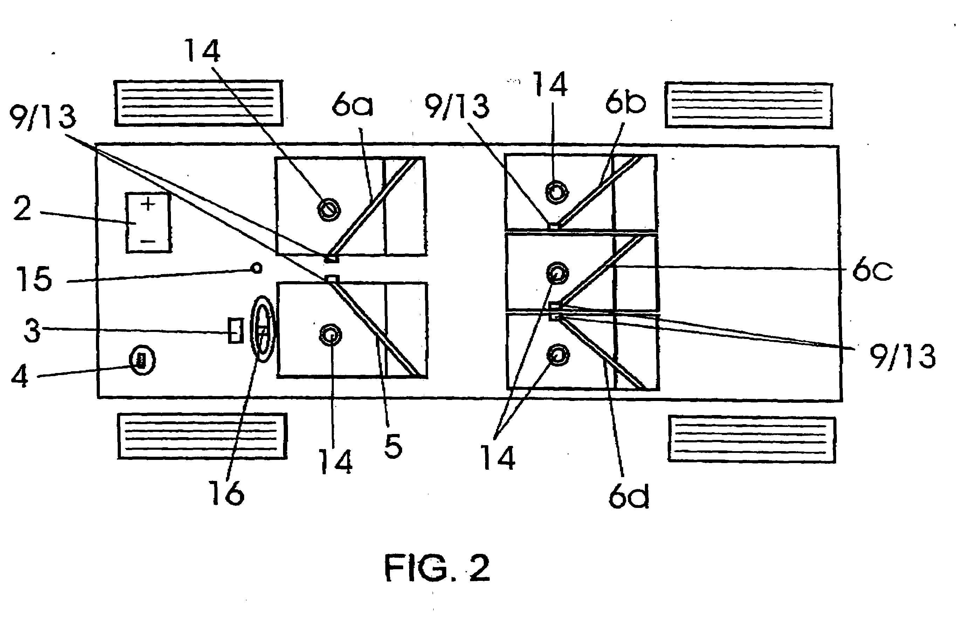

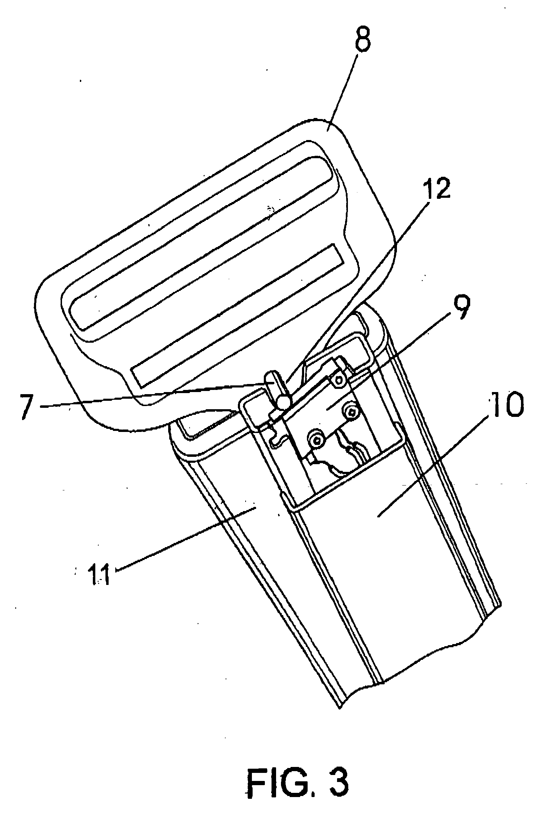

Consequently, as can be seen in figures 2 and 3, all the vehicle safety seat belts have a push button (7) located in the respective buckle (8) which activates the switch (9) that is inserted into a groove (10) attached to the lower support (11) of the same. To allow that push button (7) to pass through and activate the switch (9), a hole (12) has been drilled in that lower support (11) (figure 3).

It should be mentioned that in newly-manufactured vehicles, that groove (10) may be modified or eliminated, as wished, by placing the switch directly inside the belt buckle (8) with its respective cabling, based on the manufacturer's design.

The mechanism of the invention also allows for the incorporation of a second switch (13) in each seat or place inside the vehicle that maintains the circuit closed, in addition to the switch (9) in the buckle (8) that has already been described above, even if the respective belt has not been buckled, and opens it by means of a sensor (14) or a similar element located in the appropriate place of the seat, that detects the presence of an occupant in that seat, thereby activating the alarm until all and each one the occupants have buckled their safety seat belts, and then close the circuit again, which allows the vehicle to be started. There is no need for the belts in unoccupied seats to be buckled.

Lastly, it must be said that the last safety seat belt (6d) of the circuit is connected to an acoustic device, such as a buzzer (15) or a similar device that is connected, in turn, to the starting key (16), to close the circuit and also connected to the safety key (4), which is the anti-theft key.

Having described the nature of the present invention in sufficient detail, and the way in which it operates, it is not considered necessary to go into greater detail about how it works, since any expert on the matter would easily understand its scope and the benefits that it brings. However, it is worth saying that based on its basic nature, the system could be used for other purposes other than the one indicated by way of example, for which it could also obtain the same protection as that being requested, provided that its fundamental principle is not altered, changed or modified.

## Claims

1. AN ELECTRONIC MECHANISM FOR APPLICATION IN AUTOMOTIVE VEHICLES TO ENFORCE THE USE OF SAFETY SEAT BELTS, with mechanisms that activate alarm signals, acoustic signals and/or luminous signals in the event that the safety seat belts are not buckled, **characterised by** the fact that it has a series of devices that prevent the vehicle from being started up. These devices include a relay (1) that is connected to the starting engine (3) of the vehicle, a conventional key (4) with two contacts (on-off) plus another middle position that serves as an anti-theft device, and is preferably located outside the interior of the vehicle and usually hidden. This is connected by means of then respective cables firstly to the driver's safety seat belt (5) and then, in succession, to the safety seat belts of the front passenger (6a) and rear safety seat belts (6b), (6c) and (6d) by means of switches (9) and to the respective seats by additional switches (13), in which the last belt (6d) of the circuit is connected to an acoustic device, such as a buzzer (15) or a similar element, that is in tum connected to the vehicle starting key (16) and also to a key (4) that acts as an anti-theft device.

2. AN ELECTRONIC MECHANISM FOR APPLICATION IN AUTOMOTIVE VEHICLES TO ENFORCE THE USE OF SAFETY SEAT BELTS, in accordance with claim 1, **characterised by** the fact that all the safety seat belts in the vehicle are fitted with a push button (7) placed at each side of the buckles (8), that presses down on the switch (9) inserted in a groove (10) attached to the lower support (11) of the belt, in which a hole has been drilled (12) to allow the push button (7) to pass through so that it can activate the switch (9).

3. AN ELECTRONIC MECHANISM FOR APPLICATION IN AUTOMOTIVE VEHICLES TO ENFORCE THE USE OF SAFETY SEAT BELTS, in accordance with claims 1 and 2 above, **characterised by** the fact that on each of the belts (5), (6a), (6b), (6c) and (6d) there is a second switch (13) that maintains the circuit closed, even if the respective safety seat belt is not buckled. That switch (13) is associated to a sensor (14) or a similar element that is positioned in the respective seat, which activates by opening the circuit, on detecting the presence of an occupant in that place or seat.
